# EUROPEAN PATENT APPLICATION

(11) **EP 1 125 622 A2**
(43) Date of publication of application: **22.08.2001**
(21) Application number: 01102602.8
(22) Date of filing: 06.02.2001
(51) Int. Cl.: B01D 46/52, B01D 46/12

(54) **Air filtration system**

(30) Priority: 14.02.2000 US 182215 P
(71) Applicant: Dart Industries Inc., Orlando, Florida 32837 (US)
(72) Inventor: Bailey, J. Rushton, Longwood, Florida 32750 (US); Frazier, Stephen E., Lake Mary, Florida 32746 (US); Reinhard, William A., Deltona, Florida 32738 (US)
(74) Representative: Howden, Christopher Andrew

(57) **Abstract**

An air filtration system is disclosed which uses a filter pack 170 which incorporates a dual-layer 190, 198, electret filter having bypass openings 200 in each layer 190, 198, for allowing a small portion of the air flowing through the filter to pass through the filter layer unfiltered. The system allows for the use of a smaller fan motor and a higher throughput of air while maintaining a laminar air flow and low back pressure resulting in an efficient and substantially quieter air filtration unit.

## Description

The present invention is directed to an air filtration system, and, more particularly, to an air filtration system having at least one filter element formed from an electret material.

### Background of the Invention:

Many different air filtration systems have been developed for removing pollutants, odors, and other undesirable substances from the air in homes, offices, hospitals and factories. Home air filtration systems benefit persons suffering from asthma or allergies or other medical conditions and are becoming increasingly popular with health-conscious individuals who desire to breath clean air. Existing systems suffer from a number of shortcomings, however, such as being too large, noisy, or inefficient, and these problems decrease the desirability or increase the expense of such systems.

A home air filtration system must be able to process air at a rate sufficient to remove impurities from the air in a room and to keep the air relatively clean even as additional pollutants, such as cigarette smoke or cooking odors, enter the room. The filtration rate of a system can be increased by making the system larger or by forcing air through a filter at a higher rate. However, as a practical matter, the size of an air filtration system for use in a home is limited by the need to be relatively portable and to not take up excessive space. If filtration is increased by using larger motors and fans, an unacceptably high level of noise will result. This is due to the greater noise produced by larger fan motors, to the increased air noise resulting from turbulence at high air speeds, and to the substantial pressure drop that occurs across the filter. Systems with small fans are often quieter, but generally cannot process enough air to effectively clean the air in a room. Attempting to improve system performance by adding additional filter elements to a system increases the resistance to air flow, increases the pressure drop through the systems, and either decreases system throughput or requires the use of a larger, louder, fan. It is often desirable to run an air filtration system continuously, but if the system is too noisy, the user may be forced to turn it off at night or when the noise becomes a distraction.

Air filtration systems use one or more filters or filter elements to remove substances from the air. A basic filter is a non-woven mesh of fibers through which air is passed. Particles of dust and dirt are trapped in the mesh as the air flows through the filter. However, if the mesh is too small, it will unduly impede the flow of air through the filter element, require the use of a large fan motor to move air therethrough, and quickly become clogged with dust and dirt. If the mesh is too large, it will not remove fine particles from the air.

These problems are partially addressed by electrostatic filters. Such filters are connected to a power source to create a charge on the filter element. Dust particles often carry an electric charge and are therefore attracted to a charged filter. Alternately, an ionizing electrode may be placed upstream of the filter to impart a charge to approaching particles opposite to that of the charge on the filter. The opposite charges attract, and the particles are drawn to and trapped by the filter element. Because the particles are attracted to the filter, a relatively large charged mesh will provide better cleaning than a somewhat finer uncharged mesh. A disadvantage of such systems is that the filters must be cleaned periodically and must constantly be connected to a power source.

Some of these problems are addressed by filters made from a material that retains a permanent electric charge, and which provide some of the benefits of an electrostatic filter without needing to be connected to a power source. Such materials are known as "electrets." The manufacture and use of these materials is described in many patent references, including US 4,626,263 and 4,886,527 which patents are incorporated herein by reference. However, even these materials can offer a significant resistance to air flow and require the use of a relatively large and noisy fan motor to obtain adequate air filtration.

While the above filters are useful for removing particulate matter from a stream of air, other filters are used for removing gasses and odors. For example, carbon filters are commonly used for this purpose. However, a large surface area of carbon must be exposed to the air in order to clean it thoroughly. This may be done by suspending carbon particles in a matrix and passing air through the matrix. As with the particulate filters described above, if the matrix unduly restricts air flow, a larger, louder, fan motor will be needed to move an adequate amount of air through the filter. And, if one uses multiple filter types, such as a carbon filter together with a fiber filter, the resistance to air flow increased. Thus it has hereto fore been particularly difficult to provide quiet air filtration when multiple filter elements are used.

It would therefore be desirable to provide an air filtration system that processed air at a rapid rate using a quiet motor and fan and that employed efficient filters that offer only a small resistance to air flow through the system.

### Summary of the Invention:

The present invention addresses these and other problems by providing an air filtration system having improved air filters. By using filters which offer decreased resistance to air flow without compromising their filtering ability, an air filtration system is provided that can be powered by a relatively small fan and incorporated into a sound-insulated system to produce an air filtration unit that is both quiet and highly effective.

In a first aspect of the invention, a filter is formed from two layers of a corrugated or pleated electret material which includes bypass openings in each layer. The layers are arranged with the pleats of one layer oriented at right angles to the pleats of the next layer and with the bypass openings of the first layer not aligned with the bypass openings of the second layer. Preferentially, the bypass openings are located in the innermost folds of the pleats, that is, in the folds that extend toward one another between the filter layers. Surprisingly, it has been found that by orienting the layers in this manner and using an electret material, increased air flow through the filter can be obtained without significantly reducing the filter's ability to remove particles from the air. Thus a system using such a filter element can process a greater volume of air and produce a smaller pressure drop across the filter. Alternately, the filter can be used in a system having a smaller, quieter fan, to process the same amount of air that was processed by a prior system using a relatively large fan.

In another aspect of the invention, the filter is incorporated into an air filtration system that includes a pre-filter, an ionizing electrode, and a carbon filter to produce a system that efficiently removes a wide range of particles and odors from the air. Advantageously, the decreased back pressure offered by the electret filter, and the use of other elements that do not significantly interfere with air flow, allows a much smaller fan to be used than would have heretofore been possible. The sound level is further reduced by providing sound insulation in a housing configured to retain a substantial portion of the sound generated by this small fan. The result is an air filtration system that is highly efficient and very quiet.

It is therefore a principal object of the present invention to provide a reduced-noise air filtration system.

It is another object of the present invention to provide an air filter that offers a low resistance to air flow.

It is a further object of the invention to provide a reduced-noise air filtration system in which a substantially laminar air flow is maintained throughout the system.

It is still another object of the invention to provide a multiple layer air filter having bypass openings in certain layers.

It is still a further object of the invention to provide an air filtration system incorporating filter elements of at least two different types.

It is yet another object of the invention to provide an electret air filter having improved filtering properties.

### Brief Description of the Drawings

These and other objects of the invention will become apparent from a reading and understanding of the following detailed description of the preferred embodiment of the invention and the following drawings of which:
Figures 1 is a perspective view of an air filtration system according to the present invention;
Figures 2a - 2b are an exploded view of the air filtration system shown in Figure 1;
Figure 3 is a sectional elevation view taken through line 3-3 in Figure 1;
Figure 4 is an elevational view of the sound-absorbing plenum shown in Figure 2b; and,
Figure 5 is an elevation view of the electret filter element shown in Figure 2b.

### Detailed Description of the Preferred Embodiment

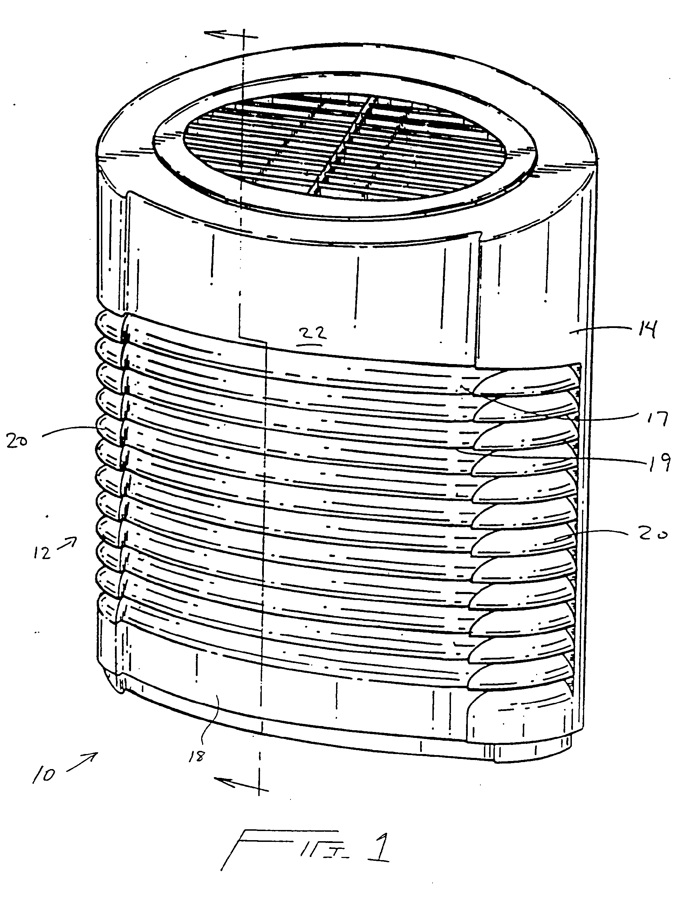

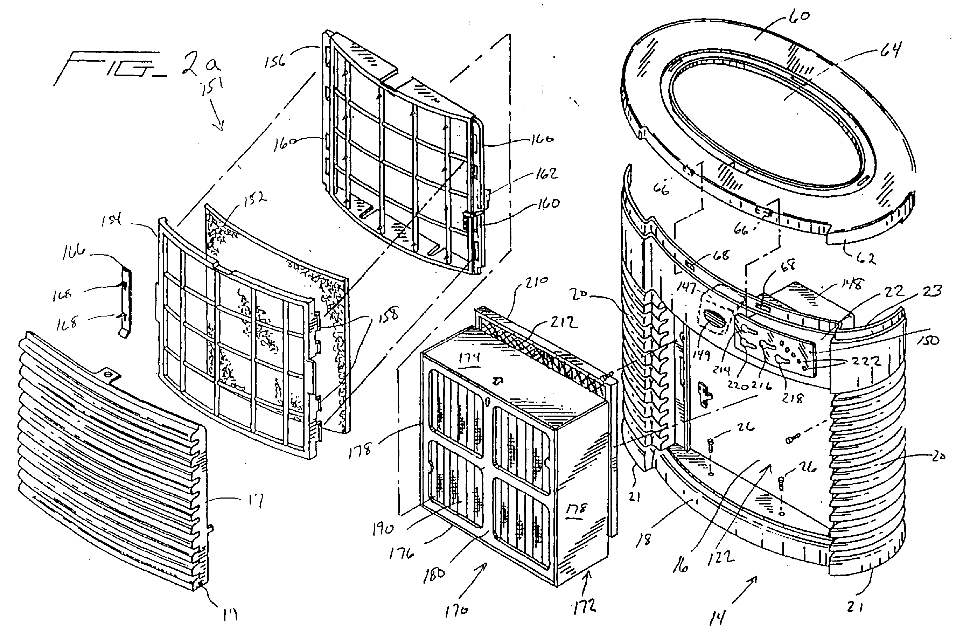

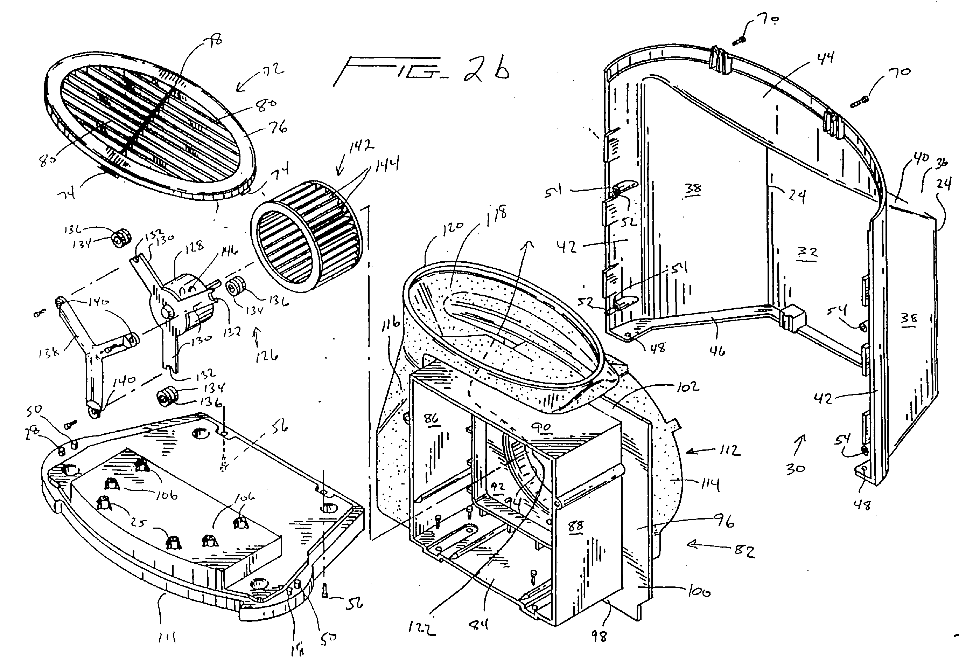

Referring now to the drawings, wherein the showings are for purposes of illustrating the preferred embodiment of the subject invention only and not for purposes of limiting same, Figure 1 shows an air filtration system 10 including a housing 12 comprising a front piece 14. As can be seen in Figure 2a, front piece 14 comprises a central opening 16 bounded by a bottom wall 18, first and second curved side wall portions 20 having bottom edges 21, and a top wall 22 having a top flange 23. A front panel 17 having downwardly curved vanes 19 snaps into central opening 16 and allows air to flow between the vanes and through the central opening while blocking the interior components from view. Front housing piece 14 is connected to bottom housing piece 24, shown in Figure 2b, and held in place by fasteners 26, preferably screws, extending through bottom wall 18 and into bosses 25 on bottom housing piece 24. Pins 28 extend upwardly from bottom piece 24 into openings (not shown) on the bottom edges 21 of side wall portions 20 to help properly position front piece 20 with respect to rear bottom piece 24 and to minimize relative rotational movement between these pieces.

Figure 2b also shows a rear housing piece 30 that comprises a rectangular back wall 32 having first and second side edges 24 and a top edge 36, first and second side walls 38 extending away from each other and from the rear wall side edges 24 at oblique angles, a top wall 40 extending from top edge 36 at an oblique angle to the rear wall and between side walls 38, arcuate side portions 42 extending from side walls 38, a connecting wall 44 extending from top wall 40 and forming a continuous curve with the arcuate side portions 42, and a bottom flange 46 extending normally to the bottom edges of back wall 32, side walls 38 and arcuate side portions 42. Flange 46 includes openings 48 adjacent to side portions 42 that fit over pins 50 on bottom piece 24 to prevent lateral movement between the rear piece and the bottom piece, and rear piece 30 is secured to front piece 14 by fasteners 52 extending through openings 54 in arcuate side portions 42 and into first and second curved sides 20 of front piece 14. Additional fasteners 56 connect rear piece 30 to bottom housing piece 24.

The housing further includes an elliptical top piece 60 having a lip 62 depending from the periphery thereof and an elliptical central opening 64. Lip 62 includes two pegs 66 projecting toward the central opening that engage openings 68 in top flange 23 of front piece top wall 22, and lip 62 fits snugly over top flange 23 and the top edge of rear connecting wall 44 of rear housing piece 30 and is secured thereto by fasteners 70 extending through lip 62 and connecting wall 44. The top of rear connecting wall 44 is higher than flange 23 on wall 22 and therefore top piece 60 angles in a downward direction from the rear of the unit to the front. A removable elliptical grille 72 having clip fasteners 74 extending'from the edge of outer portion 76, snaps into central opening 64. Grille 72 further comprises a central strut 78 and parallel fins 80 extending from strut 78 to outer portion 76 and generally normally to strut 78 and outer portion 76.

A frame 82 that functions as a motor support and filter housing is mounted on bottom housing piece 24 between front piece 14 and rear piece 30. Support frame 82 comprises a bottom wall 84, a first side wall 86, a second side wall 88, a top wall 90 and a rear wall 92 including a circular opening 94, which rear wall is connected to the frame top, bottom, and first and second side walls. A rear wall flange 96 extends outwardly from the periphery of rear wall 92 normal to the frame top, bottom, and side walls. Flange 96 comprises a bottom wall flange portion 98 extending normally to bottom wall 84, a second wall flange portion 100 extending normally to second side wall 88, and a top wall flange portion 102 extending normally to top wall 90. Bottom wall 84 rests on bosses 106 on bottom piece 24 which bosses include bores 108. Frame 82 is connected to bottom housing piece 24 with a number of fasteners 110 that extend through the frame bottom wall and into bores 108. Significantly, the portions of bottom wall 84 resting on bosses 106 and the bottom edge of bottom wall flange portion 98 are the only direct contact between support frame 82 and bottom housing piece 24, and this helps prevent vibration from being transmitted from the motor to the floor. This in turn contributes to a quieter system.

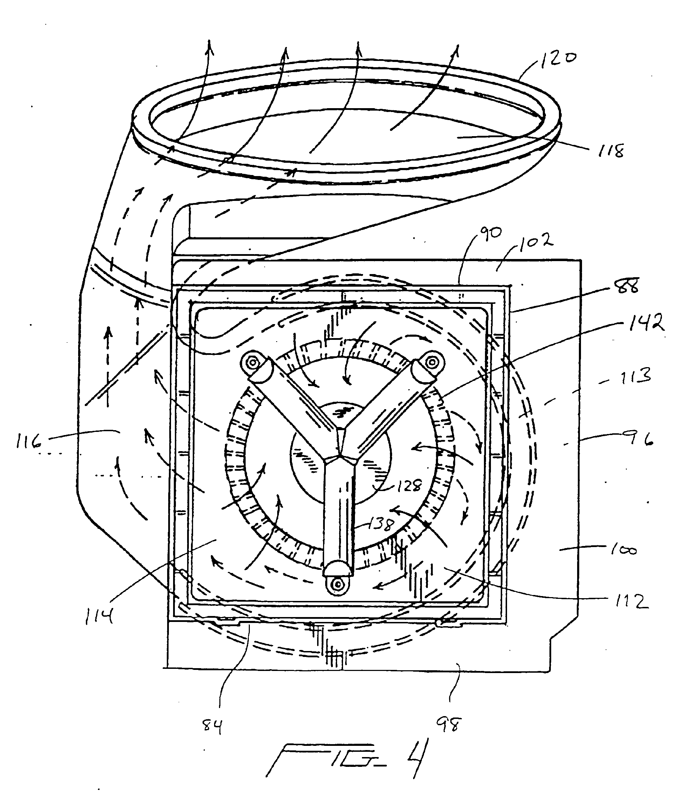

A sound absorbing plenum 112, having an outer wall 113 is bonded to rear wall 92 of the motor support frame over opening 94 to allow fluid communication between the interior of the support frame and the plenum and such that the plenum partially overlays top wall 90 and first side wall 86 of the motor support frame. The outer wall 113 is preferably formed from a foamed thermoplastic material such as polystyrene. As can be seen from Figure 4, plenum 112 includes a lower, generally cylindrical chamber portion 114 located substantially behind rear wall flange 96, a throat portion 116, extending from and in fluid communication with chamber 114 upwardly along first side wall 86, and a mouth portion 118 connected to an upper end of throat portion 116 and overlaying top wall 86, having an elliptical periphery 120 terminating beneath and generally corresponding in shape to grille 72.

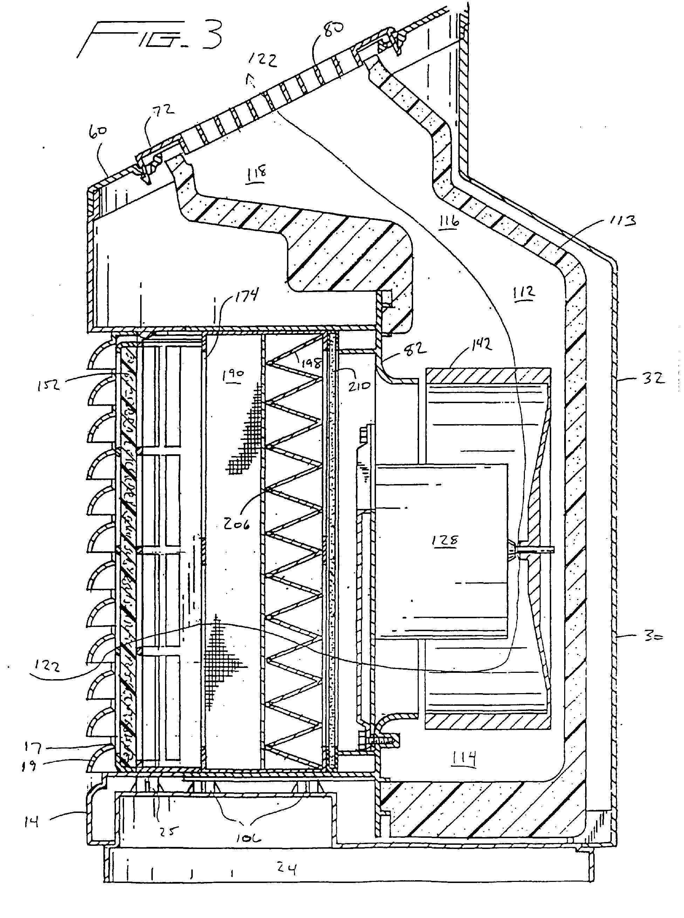

The assembly of elements described to this point defines a air flow passage 122, shown in Figure 3, through which air will pass and be processed by elements described hereinafter. Specifically, air flow passage 122 begins with the spaces between vanes 19 on front panel 17 and continues through central opening 16 in front housing piece 14. The passage continues into filter housing 82, though opening 94 in support frame 82 and into cylinder portion 114 of plenum 112, up throat portion 116, into mouth 118 and out through grille 72 in top housing piece 60. References herein to upstream and downstream directions are relative to air flowing through passage 122 from front panel 17 to top grille 72. A motor and a number of filter elements for moving and filtering air passing through passage 122 will now be described.

A fan 126 is mounted in motor support frame 82 for moving air through passage 122. Fan 126 comprises a stator 128 having three angularly spaced support legs 130 extending radially therefrom and ending in bight portions 132. Cylindrical rubber grommets 134 having circumferential grooves 136 are placed into bights 132 with the bights engaging the grooves. A three-arm spider 138 overlays the support legs and includes openings 140 at the terminal end of each leg aligned with the central openings of grommets 134. Stator 128 is mounted on the upstream side of rear wall 92 of motor support frame 82 by passing fasteners through openings 140 in the legs of spider 138, through grommets 134 and into wall 92. This use of grommets between the stator and wall 92 reduces the vibrations that will be transmitted by the fan into support frame 82 and provides for quieter operation.

Stator 128 extends through opening 94 in rear wall 92 of motor support frame 82 and into cylindrical portion 114 of plenum 112. A squirrel-cage type rotor 142 having fins 144 is mounted on the stator for rotation thereabout in a conventional manner. Care must be taken in balancing the rotor to ensure a minimum of vibration during use. Power is supplied to the fan via terminals 146 on stator 128 which terminals are connected to a controller 148. Controller 148 is mounted on top wall 22 of front housing piece 14 and includes a pollution concentration sensor 147 behind a grate 149 in top wall 22 of front housing piece 14. The preferred pollution sensor is a commercial product available from Capteur Sensors of Didcot, United Kingdom. The controller is also connected to a control panel 150 with several actuating buttons and indicator lights the function of which will be described hereafter, accessible from the outside of the housing. The controller is also connected to a source of electrical power using a power cord (not shown).

Referring now to Figure 2a, three filter elements are mounted in air flow pathway 122 between front panel 17 and fan 126. The first filter element comprises a pre-filter assembly 151 including an open pore foam pre-filter 152 held between a first lattice member 154 and a second lattice member 156. Member 154 includes tabs 158 extending from a rear surface thereof that are received within slots 160 on second lattice member 156 to hold the first and second lattice members together. A second pair of tabs 162 extends from the side of the second lattice member opposite the first member, and tabs 162 fit within slots 164 along the edges of first and second curved sides 20 of front housing piece 14 to hold the pre-filter assembly in the housing. The lattice members hold the pre-filter securely in place while exposing a substantial portion of the pre-filter surface to an air flow so as not to interfere with its filtering ability. Pre-filter assembly 151 removes large particles from the air stream entering the passageway 122 and helps reduce premature clogging of the finer-pore filters further downstream. In addition, dust and dirt collected on the pre-filter is readily visible to anyone removing the front panel from the assembly and may serve as a reminder that other filters need to be cleaned or replaced.

Also shown in Figure 2a is a clip 166 that connects to the front or rear lattice piece for holding one or more ionizing electrodes 168. The electrodes 168 are wired to controller 148 which includes a switch for selectively supplying a very small current to the electrodes at a very high voltage, over 10,000 volts, for example. The electrode produces an electromagnetic field that ionizes many of the particles passing through the front panel 17 in the vicinity of the electrode in a well known manner. The charged particles can then be readily trapped by a charged filter element downstream of the electrode.

The charged filter element in the preferred embodiment comprises a replaceable filter pack 170 including a case 172 formed of cardboard, paperboard, or similar material, and having a top wall 174, a bottom wall 176, first and second side walls 178, a front wall 180 having four openings 182 therethrough and a rear wall having four openings therethrough substantially aligned with openings 182 in the front wall. The filter pack is designed to be inserted into housing 82 with the top wall 174, bottom wall 176, and side walls 178 of case 172 facing the respective top wall 90, bottom wall 84, and first and second side walls 86 and 88 of the motor support frame 82 and so that rear wall 184 of case 172 overlies the rear wall 92 of the motor support frame. The filter pack is disposable and can be readily replaced at the end of its useful life.

Two layers of an electret material are mounted inside case 172 for filtering air that passes through the filter pack. The preferred electret material is a product available from 3M Corporation under the trade name "Filtrete" and comprises a non-woven mesh of material that has been treated to maintain a relatively permanent electric charge. The first and second layers are preferably folded or pleated and arranged such that the pleats of one layer run at right angles to the pleats of the other layer. Furthermore, the first or upstream layer is preferably formed from a material having a weight of about 65 grams per square meter and the second or downstream layer from a material having a weight of about 100 grams per square meter. Electret material is commonly available in these and other weights.

To form the filter element, a first layer of electret material 190 having a top edge 192, a bottom edge 194 and first and second side edges 196 is folded to form pleats running between top edge 192 and bottom edge 194 that are approximately one inch deep. A sufficient width of material is used so that the pleated layer of material can be connected between the first and second sides 178 of case 172 with a pleat density of about four to five pleats per inch. Each pleat adjacent to one of the first and second side edges 196 is glued or otherwise attached to the inner surfaces of first and second case side walls 178. The top edge 192 and bottom edge 194 of the pleated first layer are attached to the inner surfaces of top wall 174 and bottom wall 176 respectively, by gluing, for example. A second layer of electret material 198 is pleated in the same manner as layer 190 but is attached to the interior of case 172 between first layer 190 and case rear wall 184 and between top wall 90 and bottom wall 84 with its pleats running at right angles to the pleats of first layer 190. In this manner, substantially all air entering case 172 through openings 182 in front wall 180 must pass through both layers of electret material before exiting through the back rear wall 184 because all edges of the electret material are glued or otherwise sealed in an airtight manner to the interior surfaces of the filter pack.

The filter pack described above is satisfactory for many filtering applications. However, because of the resistance tc air flow imposed by the dual layers of filter material, a relatively large fan motor must be used to draw air through the filter pack. In addition, the relatively large pressure drop that occurs across these two layers as air passes through increases the noise level of the filtration system. Applicant has found, surprisingly, that bypass openings cut into the layers of filtering material arranged in the above manner to increase air flow therethrough do not noticeably reduce the ability of the system to remove particles from the air. The presence of these bypass openings, however, does reduce the pressure drop across the filter pack, and the noise generated by air passing through the filter, and allows a smaller, quieter fan to be used than would have been possible in the absence of these openings.

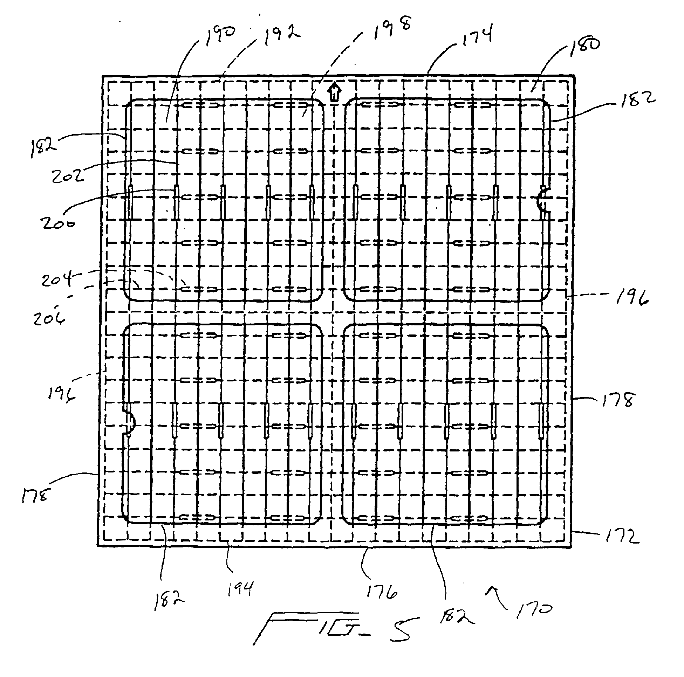

As seen in Figure 5, bypass openings or slits 200 approximately 1 inch long are formed in the interior folds 202 of first layer 190 and slightly shorter bypass slits (0.375 inch, for example) 204 are formed in the interior folds 206 of second layer 198. The slits may have a slight width, but preferably are substantially closed when no pressure differential exists across the filter. Slits 200 are offset from slits 204 to reduce the likelihood that particle laden air could pass unfiltered through both filter layers. The smaller slits in the second layer are significant in that they help ensure that a minimal amount of unfiltered air passes through this second layer. This likelihood is further reduced by the circuitous path that air follows as it passes through pleats oriented in one direction and then through pleats oriented at right angles thereto. When air passes through filter pack 170, most will have been filtered by both layers of electret material, a small amount by only one layer, and a very small amount may possibly have passed through the filter pack unfiltered.

The odds that particles will be removed from the air stream are increased due to the charge carried by the electret material. As described above, an ionizing electrode 168 imparts a charge to particles in the air stream entering the filtration system. The electret carries a charge opposite to the charge imparted by electrode 168 and therefore the charged particles are attracted to and trapped in the filter layers as they travel through the filter element. In changing direction as it passes between the filter layers it becomes even more likely that particles will contact the filter and be trapped. The preferred material, Filtrete, carries both positive and negative charges and therefor a positive or negative ionizing electrode can be used. Even if the ionizing electrode is not activated, the inherent charge on some particles will help draw them to the filter element.

Figure 2a shows a third filter element for filtering air passing through passage 122, namely a carbon filter 210. Carbon filters are well known for removing very small particles and molecules from the air and are useful for reducing odors. The preferred carbon filter is made from a material available from 3M Corporation under the trade name "Agglomerated Carbon," and provides for efficient air filtration at the necessary throughput capacities without causing a substantial pressure drop across the filter. A scrim 212 is preferably provided, at least on the downstream side of the carbon filter, to hold the filter together and reduce the likelihood that pieces of the filter will be torn therefrom during use of the system.

Controller 148 is connected to a source of electrical power, such as a wall outlet, using a power cord and conventional wiring (not shown). Control panel 150 includes a first button 214 that controls system power. A second button 216 toggles fan 126 between high speed and low speed operation. At the low, or normal operating speed, the system has a throughput of about 80 cubic feet of air per minute, and produces a noise level (measured one meter from the front housing piece) of less than about 50 dbA. At the high fan speed, the system is capable of processing about 100 cubic feet of air per minute and operates at a slightly higher noise level. The system powers up with the fan running at low speed, but can be manually shifted to the higher speed to clean air in a room quickly or to handle a sudden influx of pollution, such as from a cigarette.

A third button 218 controls the operation of the ionizing electrode 168. While it is generally preferable to operate the electrode at all times to obtain the maximum benefit of the system, a user may at times wish to disconnect power from this electrode for perceived reasons of safety.

A fourth button 220 controls the state of pollution concentration sensor 149. When this sensor is active, it senses for one or more pollutants, such as cigarette smoke or various gasses. When a predetermined concentration is exceeded, the sensor sends a signal to the controller to toggle the fan speed from low to high and to start a timer in the controller. After the timer has counted a given length of time, such a 30 minutes, the fan speed is returned to low. In this manner, the system can operate at a quiet and efficient level under normal conditions and automatically shift to high speed when necessary. The timer in the controller controls a series of lights 222 on the front of control panel 150, illuminating all the lights when the pollution sensor first increases the fan speed and extinguishing the lights one at a time, every five minutes, for example, until the last light is extinguished as the fan returns to its low level. The lights provide a visual indication of where the system is in this process.

The operation of the system and the passage of air through passageway 122 will now be described. The system is activated by pressing power button 214 to activate fan 126 at the low speed setting. The rotation of fins 144 of rotor 142 (in a clockwise direction, as viewed from the front of the unit) pushes air in plenum 112 up throat portion 114 of the plenum and out mouth 118. A pressure drop occurs in plenum 112 as air is forced from that chamber that causes air to be pulled toward fan 126 through front panel 17 and along pathway 122. -The air passes through front grill 17 and past ionizing electrode 168, where particles therein receive an electric charge, and toward and through pre-filter element 151 where gross particles of dirt and debris are trapped. After leaving the pre-filter, the air impinges upon the upstream surface of filter pack 170. Most of the air is pulled thought the charged mesh of this first layer, and charged particles that approach the electret material are attracted thereto and may become trapped. Some air and particles may travel through bypass openings 200 and into the region between the filter layers. Here, the unfiltered air mixes with the air that has been filtered by the first layer and is pulled toward the upstream side of second layer of filter material 198. Because the bypass openings of the second layer are in the inner folds of the downstream layer pleats, and are offset from the openings in the first layer, the air that passes unfiltered through the first layer will be directed against a pleat portion that does not include a bypass opening. A small amount of air that has been filtered by the first layer will pass through openings 204 in layer 198 where it will mix with air that has been filtered by the second layer. From there, the air is drawn through the carbon filter 210 where odors and gas molecules are removed, past stator 128 to the interior of rotor 142, out through fins 144, and into plenum 112.

The combination and arrangement of elements described herein produces a quiet and effective air filtration system. Various features reduce the system sound output in various ways. For example, the low resistance to air flow imposed by the filter elements described, in particular the electret filter element 170 having bypass openings in the filter layers, allow a smaller, quieter fan to be used. Next, the rotor is carefully balanced so that it produces a minimum of vibration, and rubber grommets 134 are used to isolate the fan motor from the housing.

Furthermore, the relatively small fan size and low pressure drop across the filter elements helps maintain a laminar air flow through the system. This is contrary to prior understandings of such systems where it was believed that a higher air flow was desirable, even if the higher air speed resulted in some turbulence. By configuring the elements to maintain a laminar air flow and reducing pressure drops, improved performance is obtained without producing unnecessary noise.

Significantly, the system includes sound insulating material in walls 113 of plenum 112, and the filter elements and housing are designed to retain sound generated therein. For example, as seen in Figure 4, plenum 112 substantially surrounds fan 126 so that the sound-absorbing material from which the plenum is formed can absorb sounds produced by the fan. In addition, throat 116 is laterally offset from cylindrical portion 114 so that only a small amount of the sound produced by the fan can leave the plenum without contacting at least one of the sound-insulating walls. Because throat 116 extends around the side of frame 82 however, air flow is not unduly restricted, and a desirable system throughput can be maintained. The remaining sound waves must bounce off one or more walls to exit the system and are attenuated in the process. The fins 80 on top grille 72 are also angled with respect to sound waves coming directly out throat 116 to present their broad faces to the sound waves. This will reflect some sound waves back into sound-absorbing mouth 118. Thus sound traveling in a downstream direction from the motor will be substantially reduced before it exits the housing.

Sound traveling in the upstream direction from the fan is also absorbed. First, sound waves must pass through carbon filter 210, both layers of electret filter pack 170, and pre-filter assembly 151 before exiting through front panel 17. Furthermore, the vanes 19 on the front panel are angled so that any sound coming directly out of air flow passage 122 will be deflected downwardly toward the ground or other surface on which the air filtration system is resting. This results in a much lower sound output from the front of the system than would otherwise be possible.

Sound traveling in any direction other than along air flow path 122 must pass through significant amounts of sound insulating or other materials such as the plastic from which housing 12 is formed, and will likewise be attenuated. Thus a substantial portion of sound produced by the system will be retained by the system without decreasing its ability to filter air.

The present invention has been described in terms of a preferred embodiment, it being understood that obvious additions and modifications to the system will become apparent to those skilled in the art upon a reading and understanding of the foregoing specification together with the drawings forming a part of this application. It is Applicant's intent that all such obvious modifications and additions be included within this patent application to the extent that they fall within the scope of the several claims appended hereto.

The features disclosed in the foregoing description, in the following claims and/or in the accompanying drawings may, both separately or in any combination thereof, be material for realising the invention in diverse forms thereof.

## Claims

1. A filter comprising an upstream wall and a downstream wall relative to a flow of fluid to be filtered, said upstream wall including a plurality of pleats oriented in a first direction and said downstream wall including a plurality of pleats oriented in a second direction with respect to said first direction.

2. A filter according to claim 1 wherein said second direction is perpendicular to said first direction.

3. A filter according to claim 2 further including at least one bypass opening through at least of one said walls.

4. A filter according to claim 2 including a plurality of bypass openings in said upstream wall and a plurality of bypass openings in said downstream wall, said upstream wall openings being offset from said downstream wall openings.

5. A filter according to claim 2 including a plurality of bypass openings in said upstream wall and a plurality of bypass openings in said downstream wall wherein the bypass openings are located in the fold portions of said pleats.

6. A filter according to claim 5 wherein said upstream wall bypass openings are slits aligned with the pleats in said upstream wall and said downstream wall bypass openings are slits aligned with the pleats in said downstream wall.

7. A filter according to claim 5 wherein said bypass openings in said upstream wall are slits oriented in a first direction and said bypass openings in said downstream wall are slits oriented in a second direction normal to said first direction.

8. A filter comprising an upstream wall and a downstream wall relative to a flow of fluid to be filtered, said upstream wall including at least one bypass opening having a length dimension oriented in a first direction, and said downstream wall including at least one bypass opening having a length dimension oriented in a second direction.

9. A filter according to claim 8 wherein said first direction is perpendicular to said second direction.

10. A filter according to claim 8 wherein said upstream wall is generally parallel to said downstream wall.

11. A filter according to claim 8 wherein said upstream wall and said downstream wall include a plurality of folds, said folds having crest portions and trough portions.

12. A filter according to claim 11 wherein said bypass openings are located in said crest portions or said trough portions.

13. A filter according to claim 11 wherein said bypass openings in said upstream wall are generally perpendicular to the bypass openings in said downstream wall.

14. A filter according to claim 8 wherein said downstream wall is thicker than said upstream wall.

15. A filter according to claim 13 wherein said downstream wall bypass openings are smaller than said upstream wall bypass openings.

16. A filter according to claim 11 wherein said bypass openings in said upstream wall are latent in the absence of a pressure differential across said upstream wall.

17. A filter according to claim 8 wherein said upstream wall and said downstream wall are pleated and wherein the pleats of said upstream wall are perpendicular to the pleats of said downstream wall.

18. A filter according to claim 17 wherein said bypass openings are located in the fold portions of said pleats.

19. A filtration system comprising:
a housing defining a fluid intake and a fluid output;
a passage connecting said intake and said output;
fan means for moving a fluid through said passage;
control means for controlling said fan means;
a first filter downstream of said intake;
an ionizing electrode downstream of said first filter;
a filter comprised of an electret material downstream of said electrode; and
a carbon filter downstream of said electret filter;
wherein said passage includes a sound-absorbing chamber between said electret filter and said output.

20. A filtration system according to claim 19 wherein said chamber is lined with a foamed thermoplastic material.

21. A filtration system according to claim 20 wherein said material is polystyrene.

22. A filtration system according to claim 20 wherein said chamber is configured such that sound waves generated by said motor are reflected by at least one surface of said chamber before exiting said output.

23. A filtration system according to claim 19 wherein the combination of said sound-absorbing chamber, electret filter and carbon filter absorb the sound waves produced by said fan means to reduce the sound level measured one meter from said housing to less than about 50 decibels at a system throughput of about 80 cubic feet per minute.

24. A filtration system according to claim 19 wherein said control means includes a sensor for detecting selected gasses or pollutants and adjusting the speed of said fan in response to the detection of said selected gasses or pollutants.

25. A filtration system according to claim 19 wherein said control means includes a sensor for detecting selected gasses or pollutants, said control means increasing the speed of said fan in response to the detection of said selected gasses or pollutants and decreasing the speed of said fan a preselected time period after said gasses or pollutants are initially detected.

26. A filtration system according to claim 19 wherein the activation of said electrode is manually selectable.

27. A filtration system according to claim 19 wherein the airflow through said passage is substantially laminar.

28. A filtration system according to claim 19 wherein said housing includes a bottom wall for supporting said housing, at least one side wall extending from said bottom wall, and a top wall connected to said at least one side wall, wherein said intake is located in said at least one side wall and said output is located in said top wall.

29. A filtration system according to claim 19 wherein said electret filter comprises a first layer facing said intake and a second layer facing said output, said first layer including at least one bypass opening having a length dimension oriented in a first direction, and said second layer including at least one bypass opening having a length dimension oriented in a second direction.

30. A filtration system according to claim 29 wherein said first direction and said second direction are oblique.

31. A filtration system according to claim 29 wherein said first direction is perpendicular to said second direction.

32. A filtration system according to claim 31 wherein said first layer and said second layer are generally parallel.

33. A filtration system according to claim 32 wherein said first layer and said second layer are pleated.

34. A filtration system according to claim 32 wherein said first layer and said second layer include a plurality of folds, said folds having crest portions and trough portions.

35. A filtration system according to claim 34 wherein said bypass openings are located in said crest portions or said trough portions.

36. A filtration system according to claim 35 wherein said second layer is thicker than said first layer.

37. A filtration system according to claim 36 wherein said second layer bypass openings are smaller than said first layer bypass openings.

38. A filtration system according to claim 37 wherein said bypass openings in said first layer are latent in the absence of a pressure differential across said first layer.

39. A filtration system according to claim 19 wherein said electret filter is a filter according to any of claims 1 to 7.

40. A filter comprising generally parallel pleated upstream and downstream walls oriented normally to a flow of fluid to be filtered, said upstream wall including a plurality of bypass openings in the form of bypass slits having a first length and oriented in a first direction, and said downstream wall including a plurality of bypass openings in the form of bypass slits having a second length less than said first length and oriented perpendicularly to said first direction, wherein said bypass slits are located in the fold portions of the pleated walls and the pleats of said upstream wall are perpendicular to the pleats of said downstream wall.

41. A filter according to claim 18 or claim 40 wherein said bypass openings are located in the concave portions of said upstream wall pleats as viewed from the upstream side of said upstream wall and in the concave portions of said downstream wall pleats as viewed from the downstream side of said downstream wall.
